# EUROPEAN PATENT APPLICATION

(11) **EP 2 822 251 A1**
(43) Date of publication of application: **07.01.2015**
(21) Application number: 14169377.0
(22) Date of filing: 22.05.2014
(51) Int. Cl.: H04L 29/08, H04N 21/472, H04N 21/438, H04N 21/239, H04N 21/231, H04L 29/06

(54) **Method and apparatus for quick content channel discovery, streaming, and switching**

(30) Priority: 05.07.2013 US 201313935886
(71) Applicant: Nokia Corporation, 02610 Espoo (FI)
(72) Inventor: Kuulusa, Mika, 33560 Tampere (FI)
(74) Representative: Nokia Corporation

(57) **Abstract**

An approach is provided for quick content channel discovery, and with minimal latency, streaming of a content stream, and switching from one content stream to another content stream available from various content providers. A method includes a buffering of one or more original content streams from one or more provider sources to generate one or more buffered content streams by at least one buffering service. The method also includes determining one or more requests from at least one device to access at least one of the one or more original content streams. The method further includes, in response to the one or more requests, an initiation of a streaming of at least one of the one or more buffered content streams from the at least one buffering service to the at least one device in place of the at least one of the one or more original content streams.

## Description

### BACKGROUND

Service providers and device manufacturers (e.g., wireless, cellular, etc.) are continually challenged to deliver value and convenience to consumers by, for example, providing compelling network services. One area of interest has been the development of services and technologies related to streaming content (e.g., music, television, video, etc.) on various user devices (e.g., mobile phones, tablets, laptops, etc.) For example, service providers have offered users the ability to select various media streams related to different subject matters, regions, and genres (e.g., Europe, U.S., Asia, classical, rock, sports, news, amateur, etc.) available from various sources such as online radio stations, content providers, or the like. However, with large volumes of content available from various providers, it is challenging and time consuming for the users to discover contents of interest and for the providers to provide efficient streaming and switching between various content streams or channels. Accordingly, service providers and device manufacturers face significant technical challenges in providing services for quick media channel discovery, streaming, and switching to a different stream or provider.

### SOME EXAMPLE EMBODIMENTS

Therefore, there is a need for an approach for quick content channel discovery, and with minimal latency, streaming of a content stream, and switching from one content stream to another content stream available from various content or service providers.

According to one embodiment, a method comprises causing, at least in part, a buffering of one or more original content streams from one or more provider sources to generate one or more buffered content streams by at least one buffering service. The method also comprises determining one or more requests from at least one device to access at least one of the one or more original content streams. The method further comprises causing, at least in part, in response to the one or more requests, an initiation of a streaming of at least one of the one or more buffered content streams from the at least one buffering service to the at least one device in place of the at least one of the one or more original content streams.

According to another embodiment, an apparatus comprises at least one processor, and at least one memory including computer program code for one or more computer programs, the at least one memory and the computer program code configured to, with the at least one processor, cause, at least in part, the apparatus to cause, at least in part, a buffering of one or more original content streams from one or more provider sources to generate one or more buffered content streams by at least one buffering service. The apparatus is also caused to determine one or more requests from at least one device to access at least one of the one or more original content streams. The apparatus is further caused to cause, at least in part, in response to the one or more requests, an initiation of a streaming of at least one of the one or more buffered content streams from the at least one buffering service to the at least one device in place of the at least one of the one or more original content streams.

According to another embodiment, a computer-readable storage medium carries one or more sequences of one or more instructions which, when executed by one or more processors, cause, at least in part, an apparatus to cause, at least in part, a buffering of one or more original content streams from one or more provider sources to generate one or more buffered content streams by at least one buffering service. The apparatus is also caused to determine one or more requests from at least one device to access at least one of the one or more original content streams. The apparatus is further caused to cause, at least in part, in response to the one or more requests, an initiation of a streaming of at least one of the one or more buffered content streams from the at least one buffering service to the at least one device in place of the at least one of the one or more original content streams.

According to another embodiment, an apparatus comprises means for causing, at least in part, a buffering of one or more original content streams from one or more provider sources to generate one or more buffered content streams by at least one buffering service. The apparatus also comprises means for determining one or more requests from at least one device to access at least one of the one or more original content streams. The apparatus further comprises means for causing, at least in part, in response to the one or more requests, an initiation of a streaming of at least one of the one or more buffered content streams from the at least one buffering service to the at least one device in place of the at least one of the one or more original content streams.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of any of originally filed claims 1-10, 21-30, and 46-48.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of quick content channel discovery, streaming, and switching of content streams, according to an embodiment;
FIG. 2 is a diagram of the components of a user equipment capable of requesting and receiving content streams from various sources, according to an embodiment;
FIG. 3 is a diagram of the components of a media platform, according to one embodiment;
FIGs. 4 through 7 illustrate flowcharts of various processes for, at least, quick content channel discovery, streaming, and switching of content streams, according to various embodiments;
FIGs. 8A through 8C are diagrams of user interfaces utilized in the exemplary processes of FIGs. 4 through 7, according to various embodiments;
FIG. 9 is a diagram of hardware that can be used to implement an embodiment of the invention;
FIG. 10 is a diagram of a chip set that can be used to implement an embodiment of the invention; and
FIG. 11 is a diagram of a mobile terminal (e.g., handset) that can be used to implement an embodiment of the invention.

### DESCRIPTION OF SOME EMBODIMENTS

Examples of a method, apparatus, and computer program for quick content channel discovery, and with minimal latency, streaming of a content stream, and switching from one content stream to another content stream available from various content or service providers are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

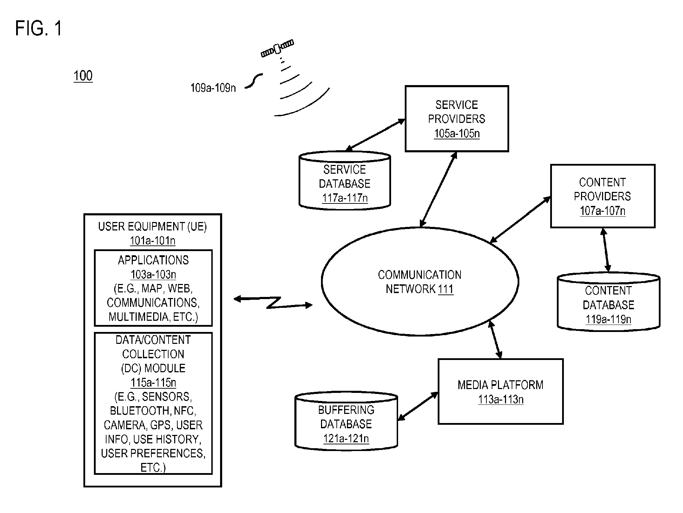

FIG. 1 is a diagram of a system capable of quick content channel discovery, and with minimal latency, streaming of a content stream, and switching from one content stream to another content stream available from various content or service providers, according to various embodiments. As previously discussed, one area of interest among service providers and device manufactures has been the development of services and technologies related to streaming media (e.g., music, television, video, etc.) from various sources to various user devices (e.g., mobile phones, laptops, tablets, etc.) However, with large volumes of content available from various providers, it is challenging and time consuming for the users to discover contents of interest and for the providers to provide efficient streaming and switching between various content streams or channels. For example, users may be able to search and access content from a large number of content/service providers based on various user preferences. However, at times, searching and browsing through available content items or content streams may be time consuming and especially frustrating when there are delays and latency in interacting with the content streams; for instance, when searching, browsing, sampling, streaming, and switching among the content streams. In some cases, there may be long delays (e.g., 3-10 seconds) before a service provider can start streaming of a content item or content streaming (e.g., a music record) to a user device. Also, sometimes there is no way to quickly check and discover what contents or content streams may be available in certain geographical regions or in selected mixed subsections of a content listing. Additionally, some of the content may be available via Internet radio channels, but at times some radio stations providing the content may be unavailable or unreachable and with the possibility of a large number of radio stations (e.g., over 20000), it would be a daunting task for a user to browse through the stations or in sub/sub/sub directory-like listings to search for contents of interest. For example, a user would be able to change channels on a radio receiver instantaneously; however, it would take a few seconds for the user to change from one radio station to another in an application, which may be used to access the same radio stations via the Internet (e.g., Internet radio.)

To address, at least these problems, a system 100 of FIG. 1 introduces the capability for quick content channel discovery, and with minimal latency, streaming of a content stream, and switching from one content stream to another content stream available from various content or service providers. As discussed, users may utilize various user devices and applications for accessing various content streams available via different online content providers where some of the content may be streamed instead of directly being downloaded to a user device. The streaming of the content may be provided by an original content provider or a third-party service provider that may be able to access the original content and then provided to a plurality of users. In one scenario, certain contents may be available only in certain geographical regions (e.g. local radio stations); however, users outside of those geographical regions may be able to access those contents via available online streaming of those contents. The system 100 provides the capability for users to efficiently search for certain contents of interest that may be streamed via online services without significant latency when the users may wish to interact with various contents available from various content providers. In one scenario, a user may browse a listing of available contents via different providers, for example, different radio stations from different regions of the world. Further, the listing may provide different information about the available contents that may indicate the type of content, a genre, a classification, a quality of the content delivery channel (e.g., high definition, noisy, low-quality, etc.) In one use case scenario, a user may search for certain types of music in a listing of different radio stations and may wish to sample several stations where the system 100 would provide a streaming of selected content streams without significant delays in providing content stream or in switching from one content stream to another. In one embodiment, the system 100 may buffer a plurality of content streams available from various content providers so that a when user requests to access a particular content stream, it may be streamed to the user from the buffered content streams and if the user continues consumption of the buffered content streamed, then the system 100 can synchronize the switching from the buffered streaming to a streaming of the same content stream available from the content provider of that particular content stream. In another scenario, if the user chooses to switch from one content stream to a next content stream, then the system 100 can facilitate the switching by utilizing the buffered contents to provide the next content stream with smooth transition and without noticeable delays. In one embodiment, the system 100 may be able to determine if a content stream or if a content provider is available for streaming by analyzing various information associated with the content stream or the content provider, and the information may be provided/presented to the users so that the users do not unnecessarily attempt to or wait to access an unavailable content stream or content provider.

In one embodiment, the system 100 may determine user preferences of a plurality of users, for example, user history, user profile, user activity, user location, or a combination thereof associated with content stream potential interest, access, and consumption so that a buffering service provider may determine to buffer various content streams available from various original content stream providers. For example, a buffering service provider may analyze user preferences of its users to determine what types of content streams the users usually access and consume so that the buffering service provider may evaluate and decide to buffer some of those content streams into its buffering service network so that those buffered content streams may be presented and suggested to those users for current or future consumption.

In one embodiment, a buffering service provider may buffer and store various content streams, available from various sources, at various sampling rates. For example, the buffering service provider may choose to buffer and store certain content streams from certain content providers at a one sampling rate and then it may choose to buffer and store other content streams from other content providers at a different sampling rate. By doing so, the buffering service provider may flexibility manage its available resources for buffering, storing, and streaming of the content streams, which may overwhelm the resources if not managed properly. In one embodiment, a buffering service provider may initiate a streaming of a content stream, which may have had been buffered and stored at a lower or higher sampling rate than the sampling rate of the original content stream. In one embodiment, the buffering service provider may determine a streaming rate (e.g., 32kbit/s, 64kbit/s, 128kbit/s, etc.) for a content stream based on network capabilities, communication channel capacity, user-load at a content stream provider, capabilities available at the user device requesting the content stream, user account, user preferences, user/device location, regional content stream provider requirements, or the like.

In one embodiment, the system 100 may stream one or more content streams at a second streaming rate based, at least in part, on whether the streaming of a content stream at a first streaming rate has occurred for more than the threshold duration. In one use case scenario, a buffering service provider may be providing a content streaming to a user device for a certain period of time at a certain streaming rate; however, if the service provider determines that the user device continues consumption of the content streaming beyond a threshold duration, then the buffering service provider may choose to continue the content streaming at a different streaming rate. For example, the buffering service provider may start the content streaming at a lower streaming rate in order to effectuate a quick delivery of the content streaming to a user device and if the user device continues consumption of the content streaming, then the buffering service provider may transition and continue the streaming at a higher streaming rate for a better user experience and content stream quality.

In one embodiment, the system 100 may cause, at least in part, a buffering of one or more original content streams from one or more provider sources to generate one or more buffered content streams by at least one buffering service. In one embodiment, a service provider may employ various network servers, elements, applications, or the like to buffer and store various media content streams available from a plurality of content providers. For instance, a service provider may buffer and store a plurality of content streams available from various radio stations (e.g., original content streams) from different geographical regions, which may be streaming live or recorded contents produced by or available at the radio stations. In one example, a buffering service provider may scan various online (e.g., available via Internet) content streams available from Europe, select all or some of them, and buffer one or more portions of the selected content streams into a buffering network (e.g., cloud computing) including a plurality of servers and network elements. In one embodiment, the buffering service may determine various parameters for the buffering process, for example, size of buffering per content stream (e.g., how many computing storage bytes, duration of buffering (seconds/minutes), etc.), quality of each buffering (e.g., streaming rate), a specific network element where a buffering should be stored (e.g., which server), and the like. In one embodiment, the one or more original content streams that are buffered by the at least buffering service includes, at least in part, all of a plurality of content streams available from the one or more provider sources or a subset of the plurality of the content streams available from the one or more provider sources; and wherein the subset of the plurality of the content streams is selected based, at least in part, on user selection information, user preference information, user profile information, user history information, user contextual information, or a combination thereof.

In one embodiment, the system 100 may determine one or more requests from at least one device to access at least one of the one or more original content streams. In one scenario, a service provider (e.g., a buffering service) may receive a request from a user device for accessing a certain content stream, where a user of the device may wish to listen to a certain song available in a list of media content streams available from an original content provider (e.g., a radio station, a television station, etc.) For example, the request may be from a user who may utilize an application (e.g., a media player) on a user device (e.g., a mobile phone, tablet, etc.) to search on the Internet for available media content streaming (e.g., music, video, etc.) from various online content/service providers and select one or more content streams for consumption at a user device. In one embodiment, the buffering service may be an intermediary service provider, which may provide a list of content and/or content streams available from various original and/or secondary content providers/producers. For example, a user may login into a user account at a service provider to browse available content streams or content streams, which the user may request to access and consume directly provided by the service provider instead of the user going to various other sources for the same content streams or content streams.

In one embodiment, the system 100 may cause, at least in part, in response to the one or more requests, an initiation of a streaming of at least one of the one or more buffered content streams from the at least one buffering service to the at least one device in place of the at least one of the one or more original content streams. In one example, the service provider may determine that the requested content stream is available from its buffered content streams and may proceed to initiate a streaming of the requested content stream from its buffering network instead of providing the streaming from one or more original content stream providers. In one embodiment, the buffering service has a lower latency for initiating the streaming of a requested content stream when compared to a content stream which may streamed by an original content stream provider. For instance, a user may request for a particular song, which may be streaming from a radio station; however, since the buffering service provider is already buffering the streaming from that radio station, the buffering service provider may initiate the streaming of that particular song from its buffering network/server instead of providing the streaming from the original content stream provider (e.g., radio station.) In this instance, the streaming from the buffering server would be substantially quicker and without a noticeable latency when compared to a streaming that the radio station may be able to initiate.

In one embodiment, the system 100 may determine that the streaming of the at least one of the one or more buffered content streams from the at least one buffering service to the at least one device has occurred for more than a threshold duration. In one scenario, a buffering service provider can determine how long a user has been consuming (e.g., listening, viewing, etc.) a certain buffered content stream and then compare that consumption duration to a predetermined threshold value. For example, the buffering service provider may set a threshold value of one minute for streaming a content stream from its buffering servers.

In one embodiment, the system 100 may cause, at least in part, a switching of the streaming of the at least one of the one or more buffered content streams to the at least one of the one or more original content streams. In one use case, if a user continues consumption of a buffered content stream provided by a buffering service provider for more than the threshold duration, then the buffering service provider may initiate a switching of the buffered streaming to a streaming provided by an original content stream provider. For example, a buffering service provider may be streaming a buffered stream including a song to a user device and if the user continues consumption of the buffered stream for more than 30 seconds, then the buffering service provider may switch the streaming to a streaming of that same song, which may be provided by a content stream provider (e.g., a radio station.) In one embodiment, the buffering service provider may determine to switch the streaming of a certain content stream from its buffering server to one of a plurality of content stream providers which may be providing a plurality of content streams that may content that certain content stream.

In one embodiment, for the switching, the system 100 may cause, at least in part, a creation of a transition from the at least one of the one or more buffered content streams to the at least one of the one or more original content streams. In one embodiment, a buffering service provider may utilize various algorithms, applications, processes, or the like in order to determine and initiate the switching of the streaming of a content stream from its buffering servers to a streaming of a content stream available from another source (e.g., a content provider, a radio station, etc.), wherein the synchronization process would provide for a smooth transition and without substantial interference with a continuous streaming of the content stream from the other source. In one embodiment, the transition includes, at least in part, a fading, a beat-matching, a time-synchronization, or a combination thereof between the at least one of the one or more buffered content streams and the at least one of the one or more original content streams. In one scenario, one or more elements of the buffering service provider network may analyze and compare a buffered content stream with a corresponding original content stream (e.g., from an original provider) for determining a common beat, tempo, rhythm, or the like so that one stream may be transitioned to the other stream with least distortion, interruption, discontinuity, or the like. In one embodiment, the service provider may continuously analyze the streaming of a content stream from a content provider to a user device and if the service provider determines that there is an issue (e.g., quality, continuity, etc.) with the streaming (a problematic streaming). Further, if the user device continues to consume the problematic streaming, then the service provider may determine if the content stream in the problematic streaming is available in the buffering servers and if so, the service provider may switch the streaming of the content stream from the content provider to a streaming of the same content stream from the buffering servers. In one embodiment, before switching the streaming from the content provider back to a streaming from the service provider, the service provider may present the option of switching back to a streaming available from the service provider.

In one embodiment, the system 100 may determine one or more connectivity characteristics between the at least one buffering service and the one or more provider sources. In one embodiment, a buffering service provider may analyze a communication connectivity channel (e.g., wired, wireless, etc.) to one or more content stream providers in order to determine quality and any potential issues associated with receiving a plurality of content streams from the one or more original or other content stream providers. For example, the characteristics may indicate quality, a streaming rate, availability, a provider source, last known issues, last know availability, frequency of issues, duration of issues, feedback from other users, or the like information associated with the providers and/or content streams associated with those streams. In one embodiment, the characteristics may indicate "health" information associated with the original providers and/or the communication connectivity channel. In one embodiment, a buffering service provider may analyze and determine a latency value when streaming of a content stream is switched from its buffering servers to a streaming of a content stream provided by an original or another content provider. In one embodiment, the users/user-devices may report to the buffering service provider (of the buffering server) the actual or an estimated delay on switching the streaming to the original content stream provider, wherein the service provider could then utilize the delay information to provide to all users statistical or the "health" information (e.g., delays, latency, availability, etc.) related to that original content stream provider.

In one embodiment, the system 100 may cause, at least in part, a generation of one or more indicators to represent the one or more connectivity characteristics. In one embodiment, a buffering service provider may utilize the information and connectivity characteristics to generate one or more indicators for representing various information related to one or more content streams and one or more original/other content stream providers. In one scenario, the indicators may include various visual indicators to indicate the "health," statistical information, or estimates; for example, an indicator could indicate a low latency and good quality associated with an available channel or a content stream provider providing a content stream of interest. In one example, different indicators (e.g., visually larger size, darker color, different shapes, etc.) could indicate different information so that the users may be able to quickly discern relevant and valuable information associated with a content stream of interest or a provider of the content stream.

In one embodiment, the system 100 may cause, at least in part, a presentation of at least one list of the one or more original content streams, the one or more provider sources, the one or more buffered content streams or a combination thereof, wherein the at least one list is sorted according to the one or more indicators. In one embodiment, a buffering service provider may sort a plurality of available content streams or the provider sources of those content streams based, at least in part, on one or more indicators associated with the streams or the providers. In one use case scenario, a list of available content streams may be sorted according to availability information, quality of the communication connectivity channel to the content streams, any associated latency issues, or the like. In one example, a user may choose to view only those content streams which may include an indicator that indicates a fast switching content stream. In one example, the buffering service provider may present available content streams based on one or more indicators and user preferences, which may include information on preferred content streams with certain indicators.

In one embodiment, the system 100 may cause, at least in part, a presentation of at least one user interface associated with the streaming of the at least one of the one or more buffered content streams, the streaming of the at least one of the one or more original content streams, or a combination thereof. In various embodiments, a buffering service provider may cause a presentation of a user interface at a user device for presenting various information and indicators associated with various content streams and the providers of those content streams. In one scenario, the user interface may be generated by one or more applications at a user device.

In one embodiment, the system 100 may cause, at least in part, a presentation of at least one user interface element in the at least one user interface, wherein the at least one user interface element indicates whether the streaming of the at least one of the one or more buffered content streams or the streaming of the at least one of the one or more original content streams is presented. In one example, a buffering service provider may provide and cause a user interface application at the user device to present one or more user interface elements, which may provide additional information associated with a content stream or a content stream provider. For example, the user interface elements may indicate that a content stream is being streamed to the user device from a buffering service provider at a certain streaming rate, quality, or the like. In one embodiment, the user interface elements may provide statistical information and comparisons on various content stream providers, which may be able to provide one or more same or different content streams of interest to the user. In one embodiment, different indicators, for example, visually larger size, darker/different colors, different shapes, or the like, may be generated and/or presented to indicate different information so that the users may be able to quickly discern relevant and valuable information associated with a content stream of interest or a provider of the content stream.

In one embodiment, the system 100 may determine one or more user interactions with the at least one user interface to access at least another one of the one or more original content streams during the streaming of the at least one of the one or more buffered content streams. In one embodiment, a buffering service provider may receive from a user device one or more user interface commands, interactions, information, or the like, which may indicate that a user or an application at the user device requests to access, receive, or consume one or more original content streams while one or more buffered content streams are being streamed to the device. For example, the buffering service provider may be streaming a content stream to a user device where a user of the user device may be browsing through other available content streams, from one or more original content stream providers, and select/request to receive one or more of the available content streams.

In one embodiment, the system 100 may cause, at least in part, in response to the one or more user interactions, an initiation of a streaming of at least another one of the one or more buffered content streams in place of the at least another one of the one or more original content streams. In one example, the buffering service provider may initiate streaming of a second buffered content stream to a user device while the user device is receiving or consuming a first buffered content stream. In one example, one or more second buffered content streams may be streamed to the user device simultaneously, serially, or may be buffered such that the user device may be able to receive and store the second buffered content streams for subsequent use.

In one embodiment, the system 100 may determine at least one input for selecting a buffered mode of operation at at least one content playback application. In one embodiment, the buffering service provider may be capable of providing a plurality of content streams at different streaming rates, connectivity channel rate, quality rate, and the like. In one example, the buffering service provider may receive a request from a user device that may indicate a mode of operation and/or one or more preference parameters that the user/user-device may wish to receive one or more content streams at the device. For example, a use may wish to select a fast mode of operation for one or more content streams, which may be streamed from one or more buffered or original providers. In one scenario, a buffering service provider may be able to provide various modes of operation and streaming capabilities from its various dedicated network elements. For example, a buffering service provider may include different buffering servers, which may stream content stream to a plurality of users/user-devices based on user account, user account activity, fee-based streaming, traffic conditions on the communication network, and the like. In one example, a user may activate a media player on his mobile device (e.g., a mobile phone, a tablet, a laptop, etc.) in order to listen to a particular media stream, e.g., from a radio station in Paris, where the media player includes various user interface elements and capabilities. By way of example, the end user may be interested in the origins of the music he is listening to and may use a map application to view portions of Paris, or the user may wish to see on the map a showing of other available original content stream providers in the same area as where a currently streaming content stream has originated from.

In one embodiment, the system 100 may cause, at least in part, a presentation of at least one mode indicator representing the buffered mode of operation, wherein the initiation of the streaming of the at least one of the one or more buffered content streams is based, at least in part, on the buffered mode of operation. In various scenarios, a buffering service provider may associate and include one or more indicators with available streamings so that a user may select and indicate a preferred mode of streaming for receiving one or more buffered content streams. In one embodiment, the buffering service provider may determine a mode of operation from user preferences that may be associated with a user account at the buffering service provider or at a user device communicating with the buffering service provider, user history, device capabilities, device resources, or the like.

As shown in FIG. 1, in one embodiment, the system 100 includes user equipment (UE) 101a-101n (also collectively referred to as UE 101 and/or UEs 101), which may be utilized to execute one or more applications 103a-103n (also collectively referred to as application/applications 103) including social networking, web browser, communications, content sharing, multimedia applications, user interface (UI), map application, web client, etc. to communicate with other UEs 101, one or more service providers 105a-105n (also collectively referred to as service providers 105), one or more content providers 107a-107n (also collectively referred to as content providers 107), one or more satellites 109a-109n (also collectively referred to as satellites 109), one or more media platforms 113a-113n (also collectively referred to as media platform 113), and/or with other components of the system 100 directly and/or via a communication network 111.

In one embodiment, the UEs 101 may include data/content collection modules 115a-115n (also collectively referred to as DC module 115) for determining and/or collecting data and/or content associated with the UEs 101, one or more users of the UEs 101, applications 103, one or more content streams (e.g., multimedia content), and the like. In addition, the UEs 101 can execute an application 103 that is a software client for storing, processing, and/or forwarding one or more information items to other components of the system 100. In various embodiments, the DC module 115 may include various sensors for detecting various signals, for example, audio, optical, Bluetooth, near field communication (NFC), RFID, or the like.

In one embodiment, the applications 103 may be utilized to browse online content and/or service provider websites to search for and access various content streams for consumption at a UE 101. For example, a user may utilize a UE 101 1 to search and request for media content available at or via a service provider's website, where the content/service provider may provide a media content stream for download and/or for steaming. In one example, the user may wish to listen to and/or view a content stream streamed to his UE 101 where a service provider may provide the content stream from a buffering server, which may already have the content stream requested by the user. In another example, the service provider may access the content stream available from a content provider, may buffer the content stream at a buffering server of the service provider and then provide the content stream to the user. In one example, the content stream may be streamed from a content provider to a service provider, where in the service provider may provide the content stream to a plurality of users.

In one embodiment, the service providers 105 may include and/or have access to one or more service databases 117a-117n (also collectively referred to as service database 117), which may include various user information, user profiles, user preferences, one or more profiles of one or more user devices (e.g., device configuration, sensors information, etc.), service providers 105 information, other service providers' information, and the like. In one embodiment, the service providers 105 may include one or more service providers offering one or more services, for example, online shopping, social networking services (e.g., blogging), content sharing, media upload, media download, media streaming, account management services, or a combination thereof. Further, the service providers 105 may conduct a search for content streams, media items, media streams, information, coupons, and the like associated with one or more users, POIs, geo-locations, and the like.

In one embodiment, the content providers 107 may include and/or have access to one or more content database 119a-119n (also collectively referred to as content database 119), which may store, include, and/or have access to various content streams. For example, the content providers 107 may store content streams (e.g., at the content database 119) provided by various users, various service providers, crowd-sourced content, and the like. Further, the service providers 105 and/or the content providers 107 may utilize one or more service application programming interfaces (APIs)/integrated interface, through which communication, media, content, and information (e.g., associated with users, applications, services, content, etc.) may be shared, accessed and/or processed. In one embodiment, a content provider 107 may provide one or more content streams via one or more content streams to a plurality of users, one or more service providers 105, and/or one or more media platforms 113. In various examples, a content provider may be an original content producer and/or a content distributor.

In one embodiment, the media platform 113 may include and/or have access to one or more content and/or buffering database 121a-121n (also collectively referred to as or buffering servers or buffering database 121). The media platform 113 may exist in whole or in part within the service providers 105, the content providers 107, the UEs 101, or it may be implemented as a stand-alone platform. In one embodiment, the media platform 113 may utilize one or more servers, applications, algorithms, software, or the like to buffer and/or store one or more content streams, which may be available from one or more other service providers 105 and/or one or more content providers 107. In one embodiment, the media platform 113 may determine, store, or provide metadata regarding various media content streams and/or content streams, which may be available via the content providers 107, the service providers 105, and/or the buffering servers 121. In one example, the media platform 113 may acquire a content stream streamed from a content provider 107 and then the media platform 113 may buffer the content stream and store one or more portions of the content stream at the buffering servers 121. In one example, the media platform 113 may acquire the content stream, buffer the content stream, and then provide the buffered content stream to one or more users, one or more service providers 105, one or more content providers 107, or the like, via a content stream generated by the media platform 113. In one embodiment, the media platform 113 may stream (e.g., to a user, a service provider 105, etc.) one or more portions of a content stream from the buffering servers 121 and then it can synchronize the content streaming from the buffering servers 121 with a content stream, which includes the same content stream as the one being streamed from the buffering servers 121, available from a content provider 107 and/or a service provider 105. For example, the media platform 113 may receive a request from a UE 101 1 for a content stream (e.g., a song), which may be available from a content provider 107, but as the media platform 113 is already buffering the requested content stream in a buffering server 121, it can provide the buffered content stream to the user. In various embodiments, the media platform 113 may provide various content streams including various content stream types, for example, including audio, video, images, or the like.

Generally, the UEs 101 may be any type of mobile terminal, fixed terminal, or portable terminal including a mobile handset, station, unit, device, healthcare diagnostic and testing devices, product testing devices, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, loud speakers, display monitors, radio broadcast receiver, electronic book device, game device, wrist watch, or any combination thereof, including the accessories and peripherals of these devices, or any combination thereof. It is also contemplated that the UEs can support any type of interface to the user (such as "wearable" circuitry, etc.) Further, the UEs 101 may include various sensors for collecting data associated with a user, a user's environment, and/or with a UE 101, for example, the sensors may determine and/or capture audio, video, images, atmospheric conditions, device location, user mood, ambient lighting, user physiological information, device movement speed and direction, and the like.

In one embodiment, the UE 101 includes a location module/sensor that can determine the UE 101 location (e.g., a user's location). The UE 101 location may be determined by a triangulation system such as a GPS, assisted GPS (A-GPS), Cell of Origin, wireless local area network triangulation, or other location extrapolation technologies. Standard GPS and A-GPS systems can use the one or more satellites 109 to pinpoint the location (e.g., longitude, latitude, and altitude) of the UE 101. A Cell of Origin system can be used to determine the cellular tower that a cellular UE 101 is synchronized with. This information provides a coarse location of the UE 101 because the cellular tower can have a unique cellular identifier (cell-ID) that can be geographically mapped. The location module/sensor may also utilize multiple technologies to detect the location of the UE 101. GPS coordinates can provide finer detail as to the location of the UE 101. In another embodiment, the UE 101 may utilize a local area network (e.g., LAN, WLAN) connection to determine the UE 101 location information, for example, from an Internet source (e.g., a service provider).

By way of example, the communication network 111 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access

(WCDMA), wireless fidelity (WiFi), wireless LAN (WLAN), Bluetooth®, Internet Protocol (IP) data casting, satellite, mobile ad-hoc network (MANET), and the like, or any combination thereof.

By way of example, the UEs 101, the service providers 105, the content providers 107, the satellites 109, and the media platform 113 may communicate with each other and other components of the communication network 111 using well known, new or still developing protocols. In this context, a protocol includes a set of rules defining how the network nodes within the communication network 111 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

In one embodiment, the UEs 101, the service providers 105, the content providers 107, and the media platform 113 may interact according to a client-server model. It is noted that the client-server model of computer process interaction is widely known and used. According to the client-server model, a client process sends a message including a request to a server process, and the server process responds by providing a service. The server process may also return a message with a response to the client process. Often the client process and server process execute on different computer devices, called hosts, and communicate via a network using one or more protocols for network communications. The term "server" is conventionally used to refer to the process that provides the service, or the host computer on which the process operates. Similarly, the term "client" is conventionally used to refer to the process that makes the request, or the host computer on which the process operates. As used herein, the terms "client" and "server" refer to the processes, rather than the host computers, unless otherwise clear from the context. In addition, the process performed by a server can be broken up to run as multiple processes on multiple hosts (sometimes called tiers) for reasons that include reliability, scalability, and redundancy, among others. It is also noted that the role of a client and a server is not fixed; in some situations a device may act both as a client and a server, which may be done simultaneously and/or the device may alternate between these roles.

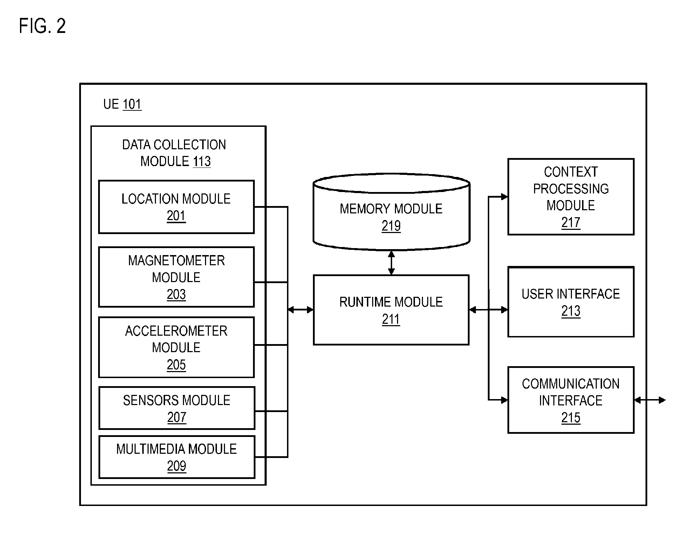

FIG. 2 is a diagram of the components of a user equipment capable of requesting and receiving content streams from various sources, according to an embodiment. By way of example, a UE 101 includes one or more components for executing various applications for enabling a user to request, receive, and consume various content streams and content streams from one or more service providers 105, content providers 107, and/or media platforms 113. It is contemplated that the functions of these components may be combined in one or more components or performed by other components of equivalent functionality. In this embodiment, the UE 101 includes a DC module 115 that may include one or more location modules 201, magnetometer modules 203, accelerometer modules 205, sensors module 207, and multimedia module 209. Further, the UE 101 may also include a runtime module 211 to coordinate the use of other components of the UE 101, a user interface 213, a communication interface 215, a context processing module 217, and a memory module 219. The applications 103 of the UE 101 can execute on the runtime module 211 utilizing the components of the UE 101.

The location module 201 can determine a user's location, for example, via location of a UE 101. The user's location can be determined by a triangulation system such as GPS, assisted GPS (A-GPS), Cell of Origin, or other location extrapolation technologies. Standard GPS and A-GPS systems can use satellites 109 to pinpoint the location of a UE 101. A Cell of Origin system can be used to determine the cellular tower that a cellular UE 101 is synchronized with. This information provides a coarse location of the UE 101 because the cellular tower can have a unique cellular identifier (cell-ID) that can be geographically mapped. The location module 201 may also utilize multiple technologies to detect the location of the UE 101. Location coordinates (e.g., GPS coordinates) can give finer detail as to the location of the UE 101 when media is captured. In one embodiment, GPS coordinates are stored as context information in the memory module 219 and are available to the context processing module 217, the DC module 115, the service providers 105, and/or to other entities of the system 100 (e.g., via the communication interface 215.) Moreover, in certain embodiments, the GPS coordinates can include an altitude to provide a height. In other embodiments, the altitude can be determined using another type of altimeter. In certain embodiments, the location module 201 can be a means for determining a location of the UE 101, an image, or used to associate an object in view with a location.

The magnetometer module 203 can be used in finding horizontal orientation of the UE 101. A magnetometer is an instrument that can measure the strength and/or direction of a magnetic field. Using the same approach as a compass, the magnetometer is capable of determining the direction of a UE 101 using the magnetic field of the Earth. The front of a media capture device (e.g., a camera) can be marked as a reference point in determining direction. Thus, if the magnetic field points north compared to the reference point, the angle the UE 101 reference point is from the magnetic field is known. Simple calculations can be made to determine the direction of the UE 101. In one embodiment, horizontal directional data obtained from a magnetometer can be stored in memory module 219, made available to other modules and/or applications 103 of the UE 101, and/or transmitted via the communication interface 215 to one or more entities of the system 100.

The accelerometer module 205 can be used to determine vertical orientation of the UE 101. An accelerometer is an instrument that can measure acceleration. Using a three-axis accelerometer, with axes X, Y, and Z, provides the acceleration in three directions with known angles. Once again, the front of a media capture device can be marked as a reference point in determining direction. Because the acceleration due to gravity is known, when a UE 101 is stationary, the accelerometer module 205 can determine the angle the UE 101 is pointed as compared to Earth's gravity. In certain embodiments, the magnetometer module 203 and accelerometer module 205 can be means for ascertaining a perspective of a user. This perspective information may be stored in the memory module 219, made available to other modules and/or applications 103 of the UE 101, and/or sent to one or more entities of the system 100.

In various embodiments, the sensors module 207 can process sensor data from various sensors (e.g., microphone, optical, Bluetooth, NFC, GPS, accelerometer, gyroscope, thermometer, etc.) to determine environmental (e.g., atmospheric) conditions surrounding the UE 101, user mood (e.g., hungry, angry, tired, etc.), location information, and various other information from a range sensors that may be available on one or more devices. For example, the sensors module 207 may detect conditions including humidity, temperature, geo-location, biometric data of the user, etc. Once again, this information can be stored in the memory module 219 and sent to the context processing module 217 and/or to other entities of the system 100. In certain embodiments, information collected from the DC collection module 115 can be retrieved by the runtime module 211 and stored in memory module 219, made available to other modules and/or applications 103 of the UE 101, and/or sent to one or more entities of the system 100. In one embodiment, the UE 101 may utilize a microphone to acquire audio signals available in a given environment, for example, detect and capture music being broadcasted via one or more speakers.

In one embodiment, the multimedia module 209 may be utilized to request and/or consume one or more media content streams, which may be available at the UE 101 or may be available as a content stream from a service provider 105, a content provider 107, or a media platform 113. In various embodiments, the multimedia module 209 may interface with the applications 103 for requesting and/or consuming the one or more media content streams. In one embodiment, the multimedia module 209 may be utilized to capture various media items, for example, images, video, audio, and the like, wherein the captured media may be submitted to one or more modules and applications of the UE 101, a service provider, and/or a content provider to further processing, storage, sharing, and the like. In various embodiments, the captured media may be shared with a content sharing module, application, etc. for sharing with one or more other devices. In various embodiments, the multimedia module 209 may interface with various sensors; for example, a camera, a microphone, etc., to capture the media items at a UE 101.

In one embodiment, the communication interface 215 can be used to communicate with one or more entities of the system 100, for example, to submit a request for and receive a content stream from various content stream providers. In various embodiments, the communication interface 215 may facilitate communications via one or more wireless communication channels and protocols, for example, WLAN, RFID, NFC, Bluetooth Smart, Bluetooth, Ant+, Z-Wave, ZigBee, or the like, wherein the communication channels may be established via one or more sensors, transceivers, transmitters, receivers, wireless charging interface, or the like. Certain communications can be via methods such as an internet protocol, messaging (e.g., SMS, multimedia messaging service (MMS), etc.), or any other communication method (e.g., via the communication network 111). In some examples, the UE 101 can send context information associated with the UE 101 to the service providers 105, content providers 107, the media platform 113, and/or to other entities of the system 100.

The user interface 213 can include various methods for a user to interface with applications, modules, sensors, and the like at a UE 101. For example, the user interface 213 can have outputs including a visual component (e.g., a screen), an audio component, a physical component (e.g., vibrations), and other methods of communication. User inputs can include a touch-screen interface, a scroll-and-click interface, a button interface, a microphone, etc. Input can be via one or more methods such as voice input, textual input, typed input, typed touch-screen input, other touch-enabled input, etc.

The context processing module 217 may be utilized in determining context information from the media platform 113, the DC module 115, and/or the applications 103 executing on the runtime module 211. This information may be caused to be transmitted, via the communication interface 215, to the service providers 105 and/or to other entities of the system 100. The context processing module 217 may additionally be utilized as a means for determining information related to the user, an instance of data, a value, a content item, a content stream, an object, a subject, and the like. In certain embodiments, the context processing module 217 can infer higher level context information from the context data such as favorite locations, significant places, common activities, interests in products and services, POIs at various geo-locations, etc. In various embodiments, the runtime module may cause one or more modules/components of a UE 101 1 to associate one or more available data items with one or more content streams available from the one or more modules/components of the UE 101. For example, date, time, location, and user information associated with a device at a particular time may be associated (e.g., as metadata) with an image that is captured by the UE 101 at that particular time.

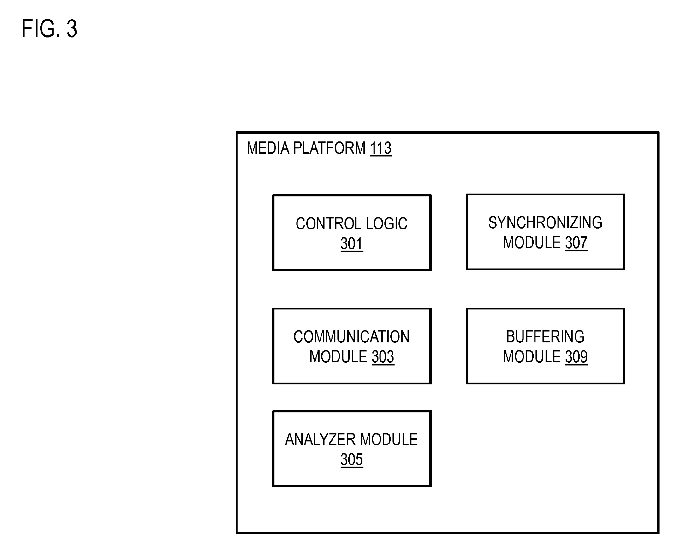

FIG. 3 is a diagram of the components of a media platform 113, according to one embodiment. By way of example, the media platform 113 includes one or more components for providing content and content streaming. It is contemplated that the functions of these components may be combined in one or more components or performed by other components of equivalent functionality. In this embodiment, the media platform 113 includes a control logic 301, a communication module 303, an analyzer module 305, a synchronizing module 307, and a buffering module 309. In various embodiments, the media platform 113 may include or have access to various processors (e.g., central processing units (CPU), digital signal processors (DSP), etc.), algorithms, applications, programs, software, or the like for effectuating one or more processes associated with content processing, content streaming, or other media and content services, which may be made available to the service providers 105, the content providers 107, to the UEs 101, or other elements within the system 100. As noted, the media platform 113 may be implemented in whole or in part within the service providers 105, the content providers 107, the UEs 101, or it may be implemented as a stand-alone platform.

The control logic 301 oversees tasks, including tasks performed by the communication module 303, the analyzer module 305, the synchronizing module 307, and the buffering module 309. For example, although other modules may perform the actual task, the control logic 301 may determine when and how those tasks are performed or otherwise direct the other modules to perform the task.

The communication module 303 is used for communication between media platform 113 and the UE 101, the service providers 105, the content providers 107, and/or other elements of the system 100. The communication module 303 may also be used to receive/transmit various content items, content streams, requests, queries, information, feedback, statistics, or the like from/to the UEs 101, the service providers 105, the content providers 107, or the like.

The analyzer module 305, in connection with the communication module 303, is used to process the requests, queries, information, feedback, statistics data, or the like to cause, at least in part, an identification or a retrieval, one or more content items or content streams. By way of example, the analyzer module 305 may be used to determine a request from a UE 101 for a content stream associated with a particular content stream, which may be available from various sources in the system 100, for instance, a song available from a radio station. In one embodiment, the analyzer module 305 may determine a streaming rate for buffering a content item and/or a content stream (e.g., into the buffering servers 121), which may be provided by the service providers 105, the content providers 107, or other sources within the system 100 (e.g., a UE 101). Additionally, the analyzer module 305 may determine a streaming rate, at which, a content stream may be provided to a UE 101. In certain embodiments, the analyzer module 305 also may be used to determine at least one social networking status associated with one or more users of the media platform 113. In one embodiment, the analyzer module 305 may process information, feedback, statistics data, or the like for determining and associating characteristics information with a content stream, a content stream, a content provider 107, a service provider 105, and the like, wherein the characteristics information may be presented before, during, or after a content stream at a UE 101. For example, the characteristics information may be presented via the communication module 303 to a user via a user interface at a UE 101. In one example, the characteristics information may be provided to the service providers 105 or the content providers 107. In other embodiments, the analyzer module 305 also may be used to determine various information associated with a content item or a content stream, for example, it may determine a type of content stream (e.g., music, video, graphics, text, etc.), a duration of the content in time, a quality associated with the recording of the content stream, or the like.

The synchronizing module 307 may be used to synchronize one or more content streams with one or more other content streams. For example, the media platform 113 may be streaming a buffered content stream from a buffering server 121 to a UE 101, wherein the buffered content stream may be based on an original content stream which may be available from one or more original sources. Here, the synchronizing module 307 may be used to synchronize the buffered content stream with the original content stream so that the streaming to the UE 101 may be transitioned and switched from the buffered content stream to the original content stream, wherein the transition and a switching is substantially transparent to the user of the UE 101. In various embodiments, the synchronizing module 307 may operate with the analyzer module 305 to determine various parameters associated with two or more content streams that are to be synchronized for switching from one stream to another. For example, the streaming rate and timing of a buffered content stream and an original content stream may be analyzed and synchronized so that the switching from one stream to the other would render a continuous streaming with a substantially same streaming rate so that a user consuming the content stream at a UE 101 would not notice a difference in the streaming rate (e.g., quality), and that the streaming would continue substantially seamlessly (e.g., no skipping or overlap.) In one example, a combination of hardware, software, and firmware may be employed to perform the tasks associated with the analysis and the synchronization of a plurality of content streams. It is contemplated that the synchronizing module 307, in connection with the analyzer module 305, may synchronize a plurality of content streams based, at least in part, on one or more beat matching, one or more tempo matching, one or more rhythm matching, time-scale, or a combination thereof processes.

The buffering module 309 may be used in the buffering of various content streams into a plurality of buffering servers (e.g., via cloud computing, server farms, etc.) and in buffering of a plurality of content streams out to one or more UEs 101, service providers 105, content providers 107, or the like. In various embodiments, the buffering module 309 may perform one or more tasks or processes in conjunction with the analyzer module 305 and/or the synchronizing module 307. In one scenario, the analyzer module 305 may receive a request for a content stream from a UE 101, process the request to determine at least what is being requested, and then provide the analysis information to the buffering module 309 so that the buffering module 309 may locate the requested content stream available from one or more buffering servers and initiate streaming of the buffer stream to the requested UE 101. In one embodiment, the buffering module 309 may collaborate with the synchronizing module 307 so that a content stream being streamed from a buffering server may be synchronized with the same content stream that may be available from one or more original sources, for example, an online radio station or content provider. In one embodiment, the buffering module 309 may determine and control various sampling rates for buffering various content streams into the buffering servers or streaming rates for streaming a buffered content stream out. For example, the buffering module 309 may determine a first streaming rate to be used in streaming at least one portion of a certain content stream to a UE 101 and then after some time, the buffering module 309 may determine a second streaming rate for streaming one or more other portions of the certain content stream to the UE 101. In one example, the buffering module 309 may determine various buffering parameters (e.g., sampling rate, sampling duration, sampling size, etc.) for use in buffering content streams into the buffering servers so that the buffering servers can maintain minimum processing capabilities, resources, storage space, power consumption, or the like.

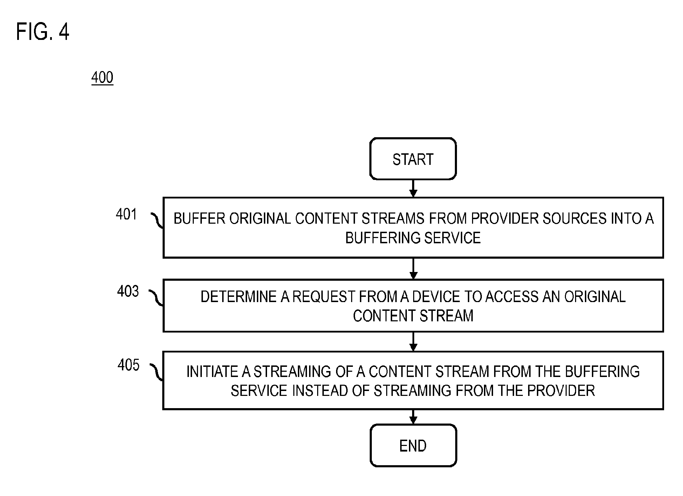

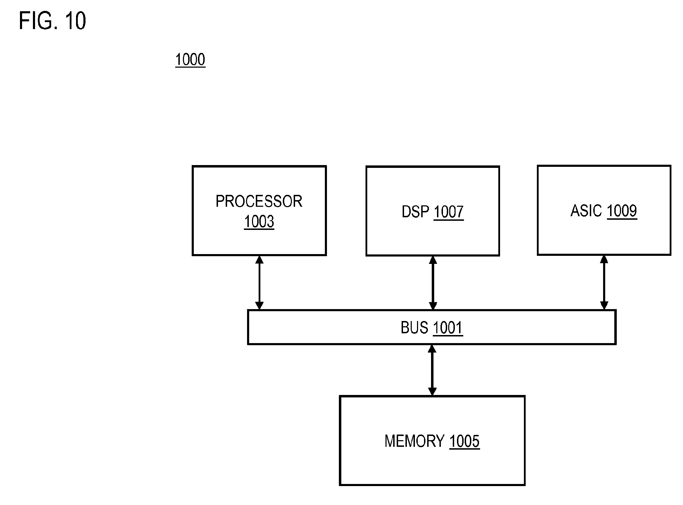

FIGs. 4 through 7 illustrate flowcharts of various processes for, at least, quick content channel discovery, and with minimal latency, streaming of a content stream, and switching from one content stream to another content stream available from various content or service providers, according to various embodiments. In various embodiments, the media platform 113 and/or the UE 101 may perform processes 400, 500, 600, and 700 that may be implemented, for instance, in a chip set including a processor and a memory as shown in FIG. 10. As such, the location media platform 113 can provide means for accomplishing various parts of the process 400, 500, 600, and 700 as well as means for accomplishing other processes in conjunction with other components of the system 100. Throughout this process, the media platform 113 may be referred to as completing various portions of the processes 400, 500, 600, and 700, however, it is understood that other components of the system 100 can perform some of and/or all of the process steps.

Referring to FIG. 4, the process 400 begins at step 401 where the media platform 113 may cause, at least in part, a buffering of one or more original content streams from one or more provider sources to generate one or more buffered content streams by at least one buffering service. In one embodiment, a service provider may employ various network servers, elements, applications, or the like to buffer and store various media content streams available from a plurality of content providers. For instance, a service provider may buffer and store a plurality of content streams available from various radio stations (e.g., original content streams) from different geographical regions, which may be streaming live or recorded contents produced by or available at the radio stations. In one example, a buffering service provider may scan various online (e.g., available via Internet) content streams available from Europe, select all or some of them, and buffer one or more portions of the selected content streams into a buffering network (e.g., cloud computing) including a plurality of servers and network elements. In one embodiment, the buffering service may determine various parameters for the buffering process, for example, size of buffering per content stream (e.g., how many computing storage bytes, duration of buffering (seconds/minutes), etc.), quality of each buffering (e.g., streaming rate), a specific network element where a buffering should be stored (e.g., which server), and the like. In one embodiment, the one or more original content streams that are buffered by the at least buffering service includes, at least in part, all of a plurality of content streams available from the one or more provider sources or a subset of the plurality of the content streams available from the one or more provider sources; and wherein the subset of the plurality of the content streams is selected based, at least in part, on user selection information, user preference information, user profile information, user history information, user contextual information, or a combination thereof.

In step 403, the media platform 113 may determine one or more requests from at least one device to access at least one of the one or more original content streams. In one scenario, a service provider (e.g., a buffering service) may receive a request from a user device for accessing a certain content stream, where a user of the device may wish to listen to a certain song available in a list of media content streams available from an original content provider (e.g., a radio station, a television station, etc.) For example, the request may be from a user who may utilize an application (e.g., a media player) on a user device (e.g., a mobile phone, tablet, etc.) to search on the Internet for available media content streaming (e.g., music, video, etc.) from various online content/service providers and select one or more content streams for consumption at a user device. In one embodiment, the buffering service may be an intermediary service provider, which may provide a list of content and/or content streams available from various original and/or secondary content providers/producers. For example, a user may login into a user account at a service provider to browse available content items or content streams, which the user may request to access and consume directly provided by the service provider instead of the user going to various other sources for the same content streams or content streams.

In step 405, the media platform 113 may cause, at least in part, in response to the one or more requests, an initiation of a streaming of at least one of the one or more buffered content streams from the at least one buffering service to the at least one device in place of the at least one of the one or more original content streams. In one example, the service provider may determine that the requested content stream is available from its buffered content streams and may proceed to initiate a streaming of the requested content stream from its buffering network instead of providing the streaming from one or more original content stream providers. In one embodiment, the buffering service has a lower latency for initiating the streaming of a requested content stream when compared to a content stream which may streamed by an original content stream provider. For instance, a user may request for a particular song, which may be streaming from a radio station; however, since the buffering service provider is already buffering the streaming from that radio station, the buffering service provider may initiate the streaming of that particular song from its buffering network/server instead of providing the streaming from the original content stream provider (e.g., radio station.) In this instance, the streaming from the buffering server would be substantially quicker and without a noticeable latency when compared to a streaming that the radio station may be able to initiate.

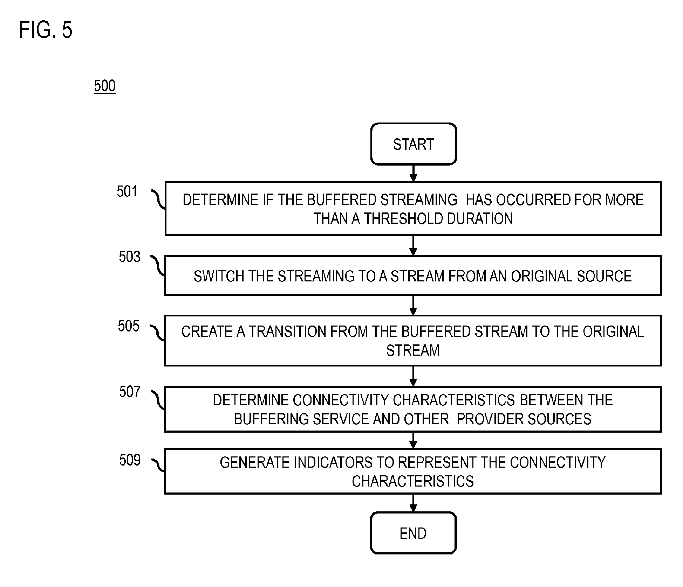

Referring to FIG. 5, the process 500 begins at step 501 where the media platform 113 may determine that the streaming of the at least one of the one or more buffered content streams from the at least one buffering service to the at least one device has occurred for more than a threshold duration. In one scenario, a buffering service provider can determine how long a user has been consuming (e.g., listening, viewing, etc.) a certain buffered content stream and then compare that consumption duration to a predetermined threshold value. For example, the buffering service provider may set a threshold value of one minute for streaming a content stream from its buffering servers.

In step 503, the media platform 113 may cause, at least in part, a switching of the streaming of the at least one of the one or more buffered content streams to the at least one of the one or more original content streams. In one use case, if a user continues consumption of a buffered content stream provided by a buffering service provider for more than the threshold duration, then the buffering service provider may initiate a switching of the buffered streaming to a streaming provided by an original content stream provider. For example, a buffering service provider may be streaming a buffered stream including a song to a user device and if the user continues consumption of the buffered stream for more than 30 seconds, then the buffering service provider may switch the streaming to a streaming of that same song, which may be provided by a content stream provider (e.g., a radio station.) In one embodiment, the buffering service provider may determine to switch the streaming of a certain content stream from its buffering server to one of a plurality of content stream providers which may be providing a plurality of content streams that may contain that certain content stream.

In step 505, for the switching, the media platform 113 may cause, at least in part, a creation of a transition from the at least one of the one or more buffered content streams to the at least one of the one or more original content streams. In one embodiment, a buffering service provider may utilize various algorithms, applications, processes, or the like in order to determine and initiate the switching of the streaming of a content stream from its buffering servers to a streaming of a content stream available from another source (e.g., a content provider, a radio station, etc.), wherein the synchronization process would provide for a smooth transition and without substantial interference with a continuous streaming of the content stream from the other source. In one embodiment, the transition includes, at least in part, a fading, a beat-matching, a time-synchronization, or a combination thereof between the at least one of the one or more buffered content streams and the at least one of the one or more original content streams. In one scenario, one or more elements of the buffering service provider network may analyze and compare a buffered content stream with a corresponding original content stream (e.g., from an original provider) for determining a common beat, tempo, rhythm, or the like so that one stream may be transitioned to the other stream with least distortion, interruption, discontinuity, or the like. In one embodiment, the service provider may continuously analyze the streaming of a content stream from a content provider to a user device and if the service provider determines that there is an issue (e.g., quality, continuity, etc.) with the streaming (a problematic streaming). Further, if the user device continues to consume the problematic streaming, then the service provider may determine if the content stream in the problematic streaming is available in the buffering servers and if so, the service provider may switch the streaming of the content stream from the content provider to a streaming of the same content stream from the buffering servers. In one embodiment, before switching the streaming from the content provider back to a streaming from the service provider, the service provider may present the option of switching back to a streaming available from the service provider.

In step 507, the media platform 113 may determine one or more connectivity characteristics between the at least one buffering service and the one or more provider sources. In one embodiment, a buffering service provider may analyze a communication connectivity channel (e.g., wired, wireless, etc.) to one or more content stream providers in order to determine quality and any potential issues associated with receiving a plurality of content streams from the one or more original or other content stream providers. For example, the characteristics may indicate quality, a streaming rate, availability, a provider source, last known issues, last know availability, frequency of issues, duration of issues, feedback from other users, or the like information associated with the providers and/or content streams associated with those streams. In one embodiment, the characteristics may indicate "health" information associated with the original providers and/or the communication connectivity channel. In one embodiment, a buffering service provider may analyze and determine a latency value when streaming of a content stream is switched from its buffering servers to a streaming of a content stream provided by an original or another content provider. In one embodiment, the users/user-devices may report to the buffering service provider (of the buffering server) the actual or an estimated delay on switching the streaming to the original content stream provider, wherein the service provider could then utilize the delay information to provide to all users statistical or the "health" information (e.g., delays, latency, availability, etc.) related to that original content stream provider.

In step 509, the media platform 113 may cause, at least in part, a generation of one or more indicators to represent the one or more connectivity characteristics. In one embodiment, a buffering service provider may utilize the information and connectivity characteristics to generate one or more indicators for representing various information related to one or more content streams and one or more original/other content stream providers. In one scenario, the indicators may include various visual indicators to indicate the "health," statistical information, or estimates; for example, an indicator could indicate a low latency and good quality associated with an available channel or a content stream provider providing a content stream of interest. In one example, different indicators (e.g., visually larger size, darker/different colors, different shapes, etc.) could indicate different information so that the users may be able to quickly discern relevant and valuable information associated with a content stream of interest or a provider of the content stream.

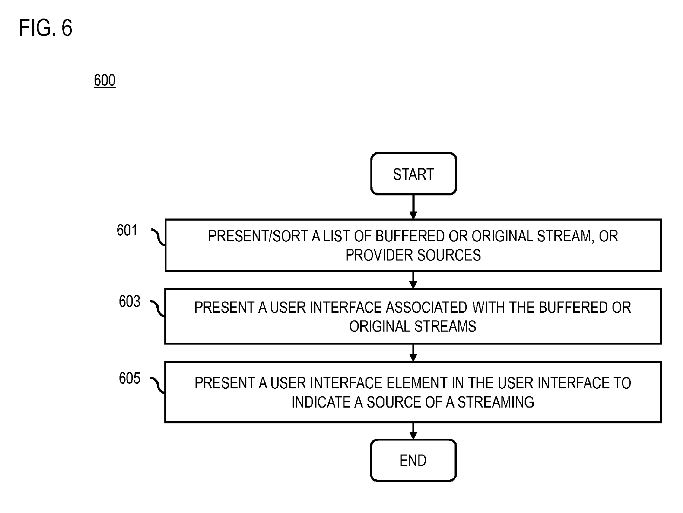

Referring to FIG. 6, the process 600 begins at step 601 where the media platform 113 may cause, at least in part, a presentation of at least one list of the one or more original content streams, the one or more provider sources, the one or more buffered content streams or a combination thereof, wherein the at least one list is sorted according to the one or more indicators. In one embodiment, a buffering service provider may sort a plurality of available content streams or the provider sources of those content streams based, at least in part, on one or more indicators associated with the streams or the providers. In one use case scenario, a list of available content streams may be sorted according to availability information, quality of the communication connectivity channel to the content streams, any associated latency issues, or the like. In one example, a user may choose to view only those content streams which may include an indicator that indicates a fast switching content stream. In one example, the buffering service provider may present available content streams based on one or more indicators and user preferences, which may include information on preferred content streams with certain indicators.

In step 603, the media platform 113 may cause, at least in part, a presentation of at least one user interface associated with the streaming of the at least one of the one or more buffered content streams, the streaming of the at least one of the one or more original content streams, or a combination thereof. In various embodiments, a buffering service provider may cause a presentation of a user interface at a user device for presenting various information and indicators associated with various content streams and the providers of those content streams. In one scenario, the user interface may be generated by one or more applications at a user device.

In step 605, the media platform 113 may cause, at least in part, a presentation of at least one user interface element in the at least one user interface, wherein the at least one user interface element indicates whether the streaming of the at least one of the one or more buffered content streams or the streaming of the at least one of the one or more original content streams is presented. In one example, a buffering service provider may provide and cause a user interface application at the user device to present one or more user interface elements, which may provide additional information associated with a content stream or a content stream provider. For example, the user interface elements may indicate that a content stream is being streamed to the user device from a buffering service provider at a certain, streaming rate, quality, or the like. In one embodiment, the user interface elements may provide statistical information and comparisons on various content stream providers, which may be able to provide one or more same or different content streams of interest to the user.

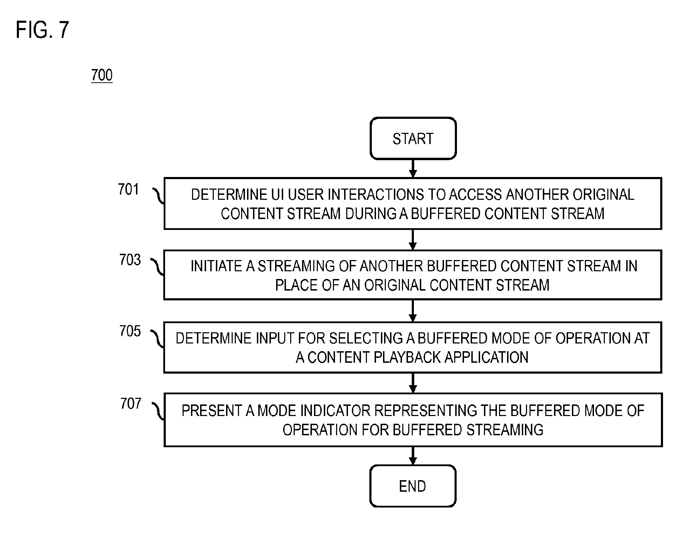

Referring to FIG. 7, the process 700 begins at step 701 where the media platform 113 may determine one or more user interactions with the at least one user interface to access at least another one of the one or more original content streams during the streaming of the at least one of the one or more buffered content streams. In one embodiment, a buffering service provider may receive from a user device one or more user interface commands, interactions, information, or the like, which may indicate that a user or an application at the user device requests to access, receive, or consume one or more original content streams while one or more buffered content streams are being streamed to the device. For example, the buffering service provider may be streaming a content stream to a user device where a user of the user device may be browsing through other available content streams, from one or more original content stream providers, and select/request to receive one or more of the available content streams.

In step 703, the media platform 113 may cause, at least in part, in response to the one or more user interactions, an initiation of a streaming of at least another one of the one or more buffered content streams in place of the at least another one of the one or more original content streams. In one example, the buffering service provider may initiate streaming of a second buffered content stream to a user device while the user device is receiving or consuming a first buffered content stream. In one example, one or more second buffered content streams may be streamed to the user device simultaneously, serially, or may be buffered such that the user device may be able to receive and store the second buffered content streams for subsequent use.

In step 705, the media platform 113 may determine at least one input for selecting a buffered mode of operation at at least one content playback application. In one embodiment, the buffering service provider may be capable of providing a plurality of content streams at different streaming rates, connectivity channel rate, quality rate, and the like. In one example, the buffering service provider may receive a request from a user device that may indicate a mode of operation and/or one or more preference parameters that the user/user-device may wish to receive one or more content streams at the device. For example, a use may wish to select a fast mode of operation for one or more content streams, which may be streamed from one or more buffered or original providers. In one scenario, a buffering service provider may be able to provide various modes of operation and streaming capabilities from its various dedicated network elements. For example, a buffering service provider may include different buffering servers, which may stream content stream to a plurality of users/user-devices based on user account, user account activity, fee-based streaming, traffic conditions on the communication network, and the like. In one example, a user may activate a media player on his mobile device (e.g., a mobile phone, a tablet, a laptop, etc.) in order to listen to a particular media stream, e.g., from a radio station in Paris, where the media player includes various user interface elements and capabilities. By way of example, the end user may be interested in the origins of the music he is listening to and may use a map application to view portions of Paris, or the user may wish to see on the map a showing of other available original content stream providers in the same area as where a currently streaming content stream has originated from.

In step 707, the media platform 113 may cause, at least in part, a presentation of at least one mode indicator representing the buffered mode of operation, wherein the initiation of the streaming of the at least one of the one or more buffered content streams is based, at least in part, on the buffered mode of operation. In various scenarios, a buffering service provider may associate and include one or more indicators with available streamings so that a user may select and indicate a preferred mode of streaming for receiving one or more buffered content streams. In one embodiment, the buffering service provider may determine a mode of operation from user preferences that may be associated with a user account at the buffering service provider or at a user device communicating with the buffering service provider, user history, device capabilities, device resources, or the like.

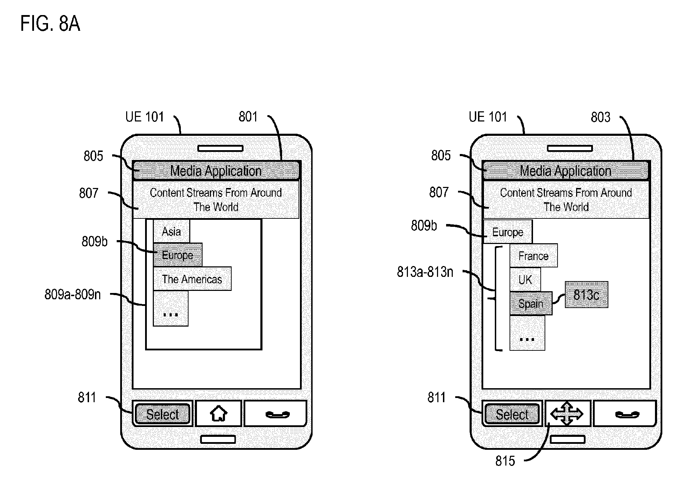

FIGs. 8A through 8C are diagrams of user interfaces utilized in the exemplary processes of FIGs. 4 through 7, according to various embodiments. As shown, the example user interfaces of FIGs. 8A-8C include one or more user interface elements and/or functionalities created and/or modified based, at least in part, on information, data, and/or signals resulting from the processes (e.g., processes 400, 500, 600, or 700) described with respect to FIGs. 4-7. More specifically, FIG. 8A illustrates two user interfaces 801 and 803 of a UE 101 (e.g., a mobile phone), where a media application 805 (e.g., from the applications 103) may be utilized for accessing various media content that may be available from various sources. For example, a user of the UE 101 may launch the media application 805 to browse the Internet in search content streams, which may be available from a plurality of radio stations, television stations, content or service providers, or the like. In one scenario, the media platform 113, via an Internet site 807 "Content Streams From Around The World" may present a list 809a-809n of various content streams, content providers, and the like, where a user or an application 103 may select one or more items from the list. It is noted that the list 809a-809n may be compiled or presented based on a plurality of options or categories, for example, by content type, content genre, content provider, content producer, or other categories determined by a service/content provider and/or a user. In one example, the list 809a-809n is presented based on a geographical area where the content streams may be originating from, e.g., "Asia," "Europe," "The Americas," "Africa," and the like, where each item in the list may include one or more sub-categories or sub-listings. In one scenario, the media platform 113 may receive a request from the UE 101 where a user may interact with the 809a-809n list via one or more UI interface options 811, a touch sensitive UI, or the like, for selecting the category "Europe" 809b. Further, the media platform 113 may present, in UI 803, one or more sub-categories 813a-813n for the selected 809b "Europe" selection. In one example, a user or the applications 103 may select "Spain" 813c in the presented list 813a-813n. In one embodiment, the UI options 811, or a touch sensitive options, may be dynamically adapted so that a user may interact with the presented lists or items, for example, the UI option 815 may be provide navigation options so that the user may return to a previous presentation screen or forward to a next presentation screen.

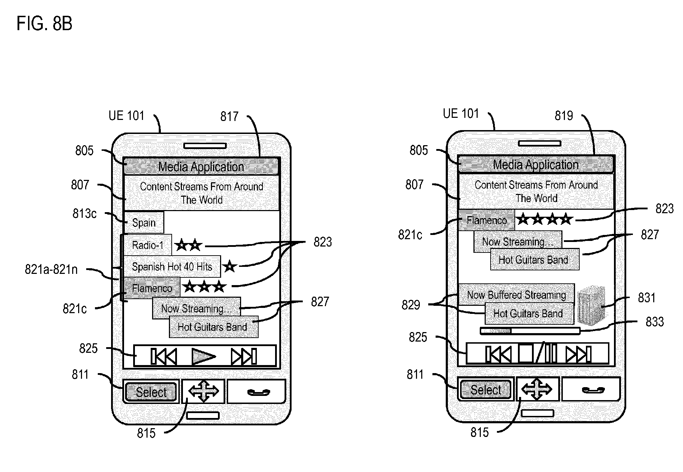

FIG. 8B depicts example UIs 817 and 819 of the UE, where a plurality of sub-categories of original content stream providers 821a-821n in the selected category "Spain" 813c are presented. For instance the content stream providers 821a-821n may be categorized and listed according to the type of content stream, the genre of the content stream, or the like. In one embodiment, the media platform 113 may analyze a communication connectivity channel (e.g., wired, wireless, etc.) to the original content stream providers 813a-813n in order to determine quality and any potential issues associated with receiving a plurality of content streams from the one or more original or other content stream providers. For example, the characteristics may indicate quality, a streaming rate, availability, a provider source, last known issues, last know availability, frequency of issues, duration of issues, feedback from other users, or the like information associated with the providers and/or content streams associated with those streams. In one embodiment, the characteristics may indicate "health" information associated with the original providers and/or the communication connectivity channel. In one embodiment, the media platform 113 may generate and associate one or more indicators 823 with each original content stream provider 821a-821n, where the indicators may be presented in the listing. In various embodiments, the indicators may include various graphical symbols and/or textual information, which may be utilized to sort a given list of original content stream providers and/or a list of associated content streams. In one example, user may select the original content provider 821c "Flamenco," which may be a radio station that provides a certain type and genre of content streams. Further, the UI element 825 may be utilized to select, control, and consume (e.g., playback) a content stream 827 (e.g., "Hot Guitars Band") that is being streamed by the original content stream provider 821c. In the UI 819, instead of a streaming from the original content stream provider 821c to the UE 101, the media platform 113 may initiate a buffered content streaming 829 of the selected content stream 827 from a network element of a buffering service of the media platform 113. In one embodiment, an indicator 831 may be presented for showing that the content stream 827 is a buffered streaming from a buffering service provider. Further, an indicator 833 may be presented to show a consumption duration of the buffered content stream.

In one embodiment, the indicator 823 is dynamically updated; for example, in the UI 819 it is updated to four stars from three stars in the UI 817.

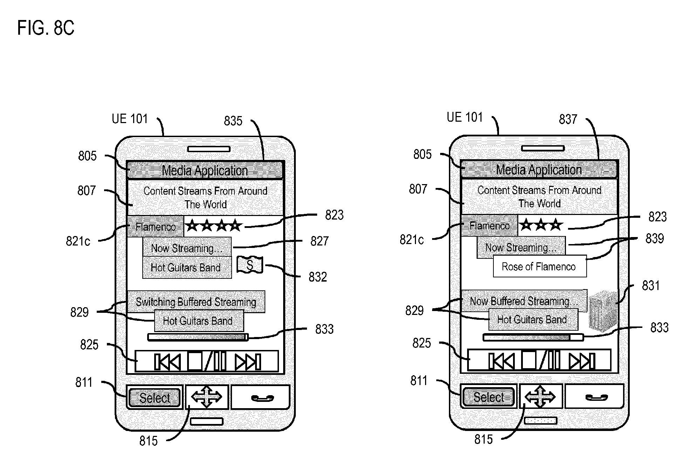

FIG. 8C depicts example UIs 835 and 837 of the UE 101, where in the UI 835, the media platform 113 may initiate a switching of the streaming of the buffered content stream 829 to the original content stream 827. In one use case, if a user continues consumption of the buffered content stream 829 for more than the threshold duration 833 (e.g., 30 seconds), then the media platform 113 may switch the buffered content streaming (e.g., with a note in 829 that the streaming is being switched) to the streaming 827 provided by the original content stream provider 821c. In one embodiment, the indicator 831 is updated to indicator 832 to indicate that the streaming is the streaming 827 from the original content stream provider 821c. Additionally, in the UI 837, the media platform 113 may receive from the UE 101 one or more UI commands, interactions, information, or the like, which may indicate that a user or an application at the UE 101 requests to access, receive, or consume one or more original content streams 839 (e.g., "Rose of Flamenco") while the buffered content stream 829 (e.g., Hot Guitars Band") is being streamed to the UE 101. In one embodiment, the media platform 113 may arrange the additionally requested content stream 839 so that it may be streamed from a buffering element (e.g., a buffering service server 831) upon the completion of the buffered stream 829 or upon completion of the streaming of content stream 827.

The processes described herein for a mechanism for a quick content channel discovery, and with minimal latency, streaming of a content stream, and switching from one content stream to another content stream available from various content or service providers may be advantageously implemented via software, hardware, firmware, or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

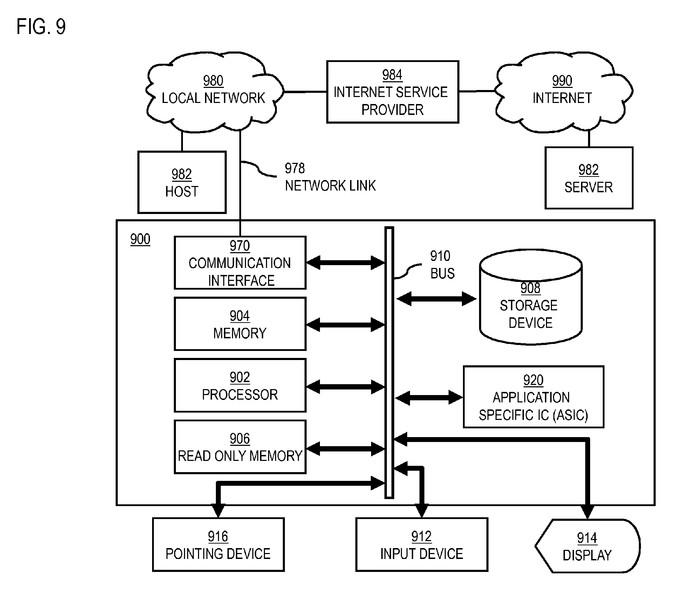

FIG. 9 illustrates a computer system 900 upon which an embodiment of the invention may be implemented. Although computer system 900 is depicted with respect to a particular device or equipment, it is contemplated that other devices or equipment (e.g., network elements, servers, etc.) within FIG. 9 can deploy the illustrated hardware and components of system 900. Computer system 900 is programmed (e.g., via computer program code or instructions) for a quick content channel discovery, and with minimal latency, streaming of a content stream, and switching from one content stream to another content stream available from various content or service providers as described herein and includes a communication mechanism such as a bus 910 for passing information between other internal and external components of the computer system 900. Information (also called data) is represented as a physical expression of a measurable phenomenon, typically electric voltages, but including, in other embodiments, such phenomena as magnetic, electromagnetic, pressure, chemical, biological, molecular, atomic, subatomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 900, or a portion thereof, constitutes a means for performing one or more steps for quick content channel discovery, and with minimal latency, streaming of a content stream, and switching from one content stream to another content stream available from various content or service providers.

A bus 910 includes one or more parallel conductors of information so that information is transferred quickly among devices coupled to the bus 910. One or more processors 902 for processing information are coupled with the bus 910.

A processor (or multiple processors) 902 performs a set of operations on information as specified by computer program code related to quick content channel discovery, and with minimal latency, streaming of a content stream, and switching from one content stream to another content stream available from various content or service providers. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 910 and placing information on the bus 910. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 902, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 900 also includes a memory 904 coupled to bus 910. The memory 904, such as a random access memory (RAM) or any other dynamic storage device, stores information including processor instructions for quick content channel discovery, and with minimal latency, streaming of a content stream, and switching from one content stream to another content stream available from various content or service providers. Dynamic memory allows information stored therein to be changed by the computer system 900. RAM allows a unit of information stored at a location called a memory address to be stored and retrieved independently of information at neighboring addresses. The memory 904 is also used by the processor 902 to store temporary values during execution of processor instructions. The computer system 900 also includes a read only memory (ROM) 906 or any other static storage device coupled to the bus 910 for storing static information, including instructions, that is not changed by the computer system 900. Some memory is composed of volatile storage that loses the information stored thereon when power is lost. Also coupled to bus 910 is a non-volatile (persistent) storage device 908, such as a magnetic disk, optical disk or flash card, for storing information, including instructions, that persists even when the computer system 900 is turned off or otherwise loses power.

Information, including instructions for quick content channel discovery, and with minimal latency, streaming of a content stream, and switching from one content stream to another content stream available from various content or service providers, is provided to the bus 910 for use by the processor from an external input device 912, such as a keyboard containing alphanumeric keys operated by a human user, or a sensor. A sensor detects conditions in its vicinity and transforms those detections into physical expression compatible with the measurable phenomenon used to represent information in computer system 900. Other external devices coupled to bus 910, used primarily for interacting with humans, include a display device 914, such as a cathode ray tube (CRT), a liquid crystal display (LCD), a light emitting diode (LED) display, an organic LED (OLED) display, a plasma screen, or a printer for presenting text or images, and a pointing device 916, such as a mouse, a trackball, cursor direction keys, or a motion sensor, for controlling a position of a small cursor image presented on the display 914 and issuing commands associated with graphical elements presented on the display 914. In some embodiments, for example, in embodiments in which the computer system 900 performs all functions automatically without human input, one or more of external input device 912, display device 914, and pointing device 916 is omitted.

In the illustrated embodiment, special purpose hardware, such as an application specific integrated circuit (ASIC) 920, is coupled to bus 910. The special purpose hardware is configured to perform operations not performed by processor 902 quickly enough for special purposes. Examples of ASICs include graphics accelerator cards for generating images for display 914, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 900 also includes one or more instances of a communications interface 970 coupled to bus 910. Communication interface 970 provides a one-way or two-way communication coupling to a variety of external devices that operate with their own processors, such as printers, scanners, and external disks. In general the coupling is with a network link 978 that is connected to a local network 980 to which a variety of external devices with their own processors are connected. For example, communication interface 970 may be a parallel port or a serial port or a universal serial bus (USB) port on a personal computer. In some embodiments, communications interface 970 is an integrated services digital network (ISDN) card or a digital subscriber line (DSL) card or a telephone modem that provides an information communication connection to a corresponding type of telephone line. In some embodiments, a communication interface 970 is a cable modem that converts signals on bus 910 into signals for a communication connection over a coaxial cable or into optical signals for a communication connection over a fiber optic cable. As another example, communications interface 970 may be a local area network (LAN) card to provide a data communication connection to a compatible LAN, such as Ethernet. Wireless links may also be implemented. For wireless links, the communications interface 970 sends or receives or both sends and receives electrical, acoustic, or electromagnetic signals, including infrared and optical signals that carry information streams, such as digital data. For example, in wireless handheld devices, such as mobile telephones like cell phones, the communications interface 970 includes a radio band electromagnetic transmitter and receiver called a radio transceiver. In certain embodiments, the communications interface 970 enables connection to the communication network 111 for quick content channel discovery, and with minimal latency, streaming of a content stream, and switching from one content stream to another content stream available from various content or service providers.

The term "computer-readable medium" as used herein refers to any medium that participates in providing information to processor 902, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 908. Volatile media include, for example, dynamic memory 904. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization, or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 920.

Network link 978 typically provides information communication using transmission media through one or more networks to other devices that use or process the information. For example, network link 978 may provide a connection through local network 980 to a host computer 982 or to equipment 984 operated by an Internet Service Provider (ISP). ISP equipment 984 in turn provides data communication services through the public, world-wide packet-switching communication network of networks now commonly referred to as the Internet 990.

A computer called a server host 992 connected to the Internet hosts a process that provides a service in response to information received over the Internet. For example, server host 992 hosts a process that provides information representing video data for presentation at display 914. It is contemplated that the components of system 900 can be deployed in various configurations within other computer systems, e.g., host 982 and server 992.

At least some embodiments of the invention are related to the use of computer system 900 for implementing some or all of the techniques described herein. According to one embodiment of the invention, those techniques are performed by computer system 900 in response to processor 902 executing one or more sequences of one or more processor instructions contained in memory 904. Such instructions, also called computer instructions, software and program code, may be read into memory 904 from another computer-readable medium such as storage device 908 or network link 978. Execution of the sequences of instructions contained in memory 904 causes processor 902 to perform one or more of the method steps described herein. In alternative embodiments, hardware, such as ASIC 920, may be used in place of or in combination with software to implement the invention. Thus, embodiments of the invention are not limited to any specific combination of hardware and software, unless otherwise explicitly stated herein.

The signals transmitted over network link 978 and other networks through communications interface 970, carry information to and from computer system 900. Computer system 900 can send and receive information, including program code, through the networks 980, 990 among others, through network link 978 and communications interface 970. In an example using the Internet 990, a server host 992 transmits program code for a particular application, requested by a message sent from computer 900, through Internet 990, ISP equipment 984, local network 980, and communications interface 970. The received code may be executed by processor 902 as it is received, or may be stored in memory 904 or in storage device 908 or any other non-volatile storage for later execution, or both. In this manner, computer system 900 may obtain application program code in the form of signals on a carrier wave.

Various forms of computer readable media may be involved in carrying one or more sequence of instructions or data or both to processor 902 for execution. For example, instructions and data may initially be carried on a magnetic disk of a remote computer such as host 982. The remote computer loads the instructions and data into its dynamic memory and sends the instructions and data over a telephone line using a modem. A modem local to the computer system 900 receives the instructions and data on a telephone line and uses an infra-red transmitter to convert the instructions and data to a signal on an infra-red carrier wave serving as the network link 978. An infrared detector serving as communications interface 970 receives the instructions and data carried in the infrared signal and places information representing the instructions and data onto bus 910. Bus 910 carries the information to memory 904 from which processor 902 retrieves and executes the instructions using some of the data sent with the instructions. The instructions and data received in memory 904 may optionally be stored on storage device 908, either before or after execution by the processor 902.

FIG. 10 illustrates a chip set or chip 1000 upon which an embodiment of the invention may be implemented. Chip set 1000 is programmed for quick content channel discovery, and with minimal latency, streaming of a content stream, and switching from one content stream to another content stream available from various content or service providers as described herein and includes, for instance, the processor and memory components described with respect to FIG. 10 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 1000 can be implemented in a single chip. It is further contemplated that in certain embodiments the chip set or chip 1000 can be implemented as a single "system on a chip." It is further contemplated that in certain embodiments a separate ASIC would not be used, for example, and that all relevant functions as disclosed herein would be performed by a processor or processors. Chip set or chip 1000, or a portion thereof, constitutes a means for performing one or more steps of providing user interface navigation information associated with the availability of functions. Chip set or chip 1000, or a portion thereof, constitutes a means for performing one or more steps for quick content channel discovery, and with minimal latency, streaming of a content stream, and switching from one content stream to another content stream available from various content or service providers.

In one embodiment, the chip set or chip 1000 includes a communication mechanism such as a bus 1001 1 for passing information among the components of the chip set 1000. A processor 1003 has connectivity to the bus 1001 to execute instructions and process information stored in, for example, a memory 1005. The processor 1003 may include one or more processing cores with each core configured to perform independently. A multi-core processor enables multiprocessing within a single physical package. Examples of a multi-core processor include two, four, eight, or greater numbers of processing cores. Alternatively or in addition, the processor 1003 may include one or more microprocessors configured in tandem via the bus 1001 to enable independent execution of instructions, pipelining, and multithreading. The processor 1003 may also be accompanied with one or more specialized components to perform certain processing functions and tasks such as one or more digital signal processors (DSP) 1007, or one or more application-specific integrated circuits (ASIC) 1009. A DSP 1007 typically is configured to process real-world signals (e.g., sound) in real time independently of the processor 1003. Similarly, an ASIC 1009 can be configured to performed specialized functions not easily performed by a more general purpose processor. Other specialized components to aid in performing the inventive functions described herein may include one or more field programmable gate arrays (FPGA), one or more controllers, or one or more other special-purpose computer chips.

In one embodiment, the chip set or chip 1000 includes merely one or more processors and some software and/or firmware supporting and/or relating to and/or for the one or more processors.

The processor 1003 and accompanying components have connectivity to the memory 1005 via the bus 1001. The memory 1005 includes both dynamic memory (e.g., RAM, magnetic disk, writable optical disk, etc.) and static memory (e.g., ROM, CD-ROM, etc.) for storing executable instructions that when executed perform the inventive steps described herein for quick content channel discovery, and with minimal latency, streaming of a content stream, and switching from one content stream to another content stream available from various content or service providers. The memory 1005 also stores the data associated with or generated by the execution of the inventive steps.

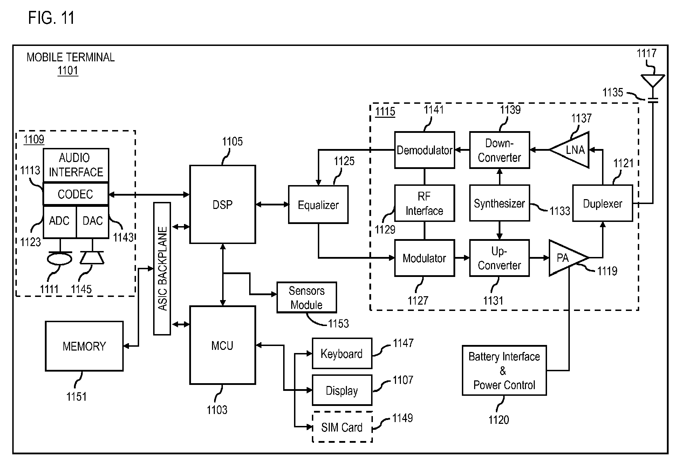

FIG. 11 is a diagram of exemplary components of a mobile terminal (e.g., handset) for communications, which is capable of operating in the system of FIG. 1, according to one embodiment. In some embodiments, mobile terminal 1101, or a portion thereof, constitutes a means for performing one or more steps for quick content channel discovery, and with minimal latency, streaming of a content stream, and switching from one content stream to another content stream available from various content or service providers. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 1103, a Digital Signal Processor (DSP) 1105, and a receiver/transmitter unit including a microphone gain control unit and a speaker gain control unit. A main display unit 1107 provides a display to the user in support of various applications and mobile terminal functions that perform or support the steps for quick content channel discovery, and with minimal latency, streaming of a content stream, and switching from one content stream to another content stream available from various content or service providers. The display 1107 includes display circuitry configured to display at least a portion of a user interface of the mobile terminal (e.g., mobile telephone). Additionally, the display 1107 and display circuitry are configured to facilitate user control of at least some functions of the mobile terminal. An audio function circuitry 1109 includes a microphone 1111 and microphone amplifier that amplifies the speech signal output from the microphone 1111. The amplified speech signal output from the microphone 1111 is fed to a coder/decoder (CODEC) 1113.

A radio section 1115 amplifies power and converts frequency in order to communicate with a base station, which is included in a mobile communication system, via antenna 1117. The power amplifier (PA) 1119 and the transmitter/modulation circuitry are operationally responsive to the MCU 1103, with an output from the PA 1119 coupled to the duplexer 1121 or circulator or antenna switch, as known in the art. The PA 1119 also couples to a battery interface and power control unit 1120.

In use, a user of mobile terminal 1101 speaks into the microphone 1111 and his or her voice along with any detected background noise is converted into an analog voltage. The analog voltage is then converted into a digital signal through the Analog to Digital Converter (ADC) 1123. The control unit 1103 routes the digital signal into the DSP 1105 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 1125 for compensation of any frequency-dependent impairments that occur during transmission though the air such as phase and amplitude distortion. After equalizing the bit stream, the modulator 1127 combines the signal with a RF signal generated in the RF interface 1129. The modulator 1127 generates a sine wave by way of frequency or phase modulation. In order to prepare the signal for transmission, an up-converter 1131 combines the sine wave output from the modulator 1127 with another sine wave generated by a synthesizer 1133 to achieve the desired frequency of transmission. The signal is then sent through a PA 1119 to increase the signal to an appropriate power level. In practical systems, the PA 1119 acts as a variable gain amplifier whose gain is controlled by the DSP 1105 from information received from a network base station. The signal is then filtered within the duplexer 1121 and optionally sent to an antenna coupler 1135 to match impedances to provide maximum power transfer. Finally, the signal is transmitted via antenna 1117 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 1101 are received via antenna 1117 and immediately amplified by a low noise amplifier (LNA) 1137. A down-converter 1139 lowers the carrier frequency while the demodulator 1141 strips away the RF leaving only a digital bit stream. The signal then goes through the equalizer 1125 and is processed by the DSP 1105. A Digital to Analog Converter (DAC) 1143 converts the signal and the resulting output is transmitted to the user through the speaker 1145, all under control of a Main Control Unit (MCU) 1103 which can be implemented as a Central Processing Unit (CPU).

The MCU 1103 receives various signals including input signals from the keyboard 1147. The keyboard 1147 and/or the MCU 1103 in combination with other user input components (e.g., the microphone 1111) comprise a user interface circuitry for managing user input. The MCU 1103 runs a user interface software to facilitate user control of at least some functions of the mobile terminal 1101 for quick content channel discovery, and with minimal latency, streaming of a content stream, and switching from one content stream to another content stream available from various content or service providers. The MCU 1103 also delivers a display command and a switch command to the display 1107 and to the speech output switching controller, respectively. Further, the MCU 1103 exchanges information with the DSP 1105 and can access an optionally incorporated SIM card 1149 and a memory 1151. In addition, the MCU 1103 executes various control functions required of the terminal. The DSP 1105 may, depending upon the implementation, perform any of a variety of conventional digital processing functions on the voice signals. Additionally, DSP 1105 determines the background noise level of the local environment from the signals detected by microphone 1111 and sets the gain of microphone 1111 to a level selected to compensate for the natural tendency of the user of the mobile terminal 1101.

The CODEC 1113 includes the ADC 1123 and DAC 1143. The memory 1151 stores various data including call incoming tone data and is capable of storing other data including music data received via, e.g., the global Internet. The software module could reside in RAM memory, flash memory, registers, or any other form of writable storage medium known in the art. The memory device 1151 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 1149 carries, for instance, important information, such as the cellular phone number, the carrier supplying service, subscription details, and security information. The SIM card 1149 serves primarily to identify the mobile terminal 1101 on a radio network. The card 1149 also contains a memory for storing a personal telephone number registry, text messages, and user specific mobile terminal settings.

Additionally, sensors module 1153 may include various sensors, for instance, a location sensor, a speed sensor, an audio sensor, an image sensor, a brightness sensor, a biometrics sensor, various physiological sensors, a directional sensor, and the like, for capturing various data associated with the mobile terminal 1101 (e.g., a mobile phone), a user of the mobile terminal 1101, an environment of the mobile terminal 1101 and/or the user, or a combination thereof, wherein the data may be collected, processed, stored, and/or shared with one or more components and/or modules of the mobile terminal 1101 and/or with one or more entities external to the mobile terminal 1101.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:
causing, at least in part, a buffering of one or more original content streams from one or more provider sources to generate one or more buffered content streams by at least one buffering service;
determining one or more requests from at least one device to access at least one of the one or more original content streams; and
causing, at least in part, in response to the one or more requests, an initiation of a streaming of at least one of the one or more buffered content streams from the at least one buffering service to the at least one device in place of the at least one of the one or more original content streams.

2. A method of claim 1, further comprising:
determining that the streaming of the at least one of the one or more buffered content streams from the at least one buffering service to the at least one device has occurred for more than a threshold duration; and
causing, at least in part, a switching of the streaming of the at least one of the one or more buffered content streams to the at least one of the one or more original content streams.

3. A method of claim 2, wherein the switching comprises:
causing, at least in part, a creation of a transition from the at least one of the one or more buffered content streams to the at least one of the one or more original content streams.

4. A method of claim 3, wherein the transition includes, at least in part, a fading, a beat-natching, a time-synchronization, or a combination thereof between the at least one of the one or more buffered content streams and the at least one of the one or more original content streams.

5. A method of any of claims 1-4, further comprising:
determining one or more connectivity characteristics between the at least one buffering service and the one or more provider sources; and
causing, at least in part, a generation of one or more indicators to represent the one or more connectivity characteristics.

6. A method of claim 5, further comprising:
causing, at least in part, a presentation of at least one list of the one or more original content streams, the one or more provider sources, the one or more buffered content streams or a combination thereof,
wherein the at least one list is sorted according to the one or more indicators.

7. A method of any of claims 2-6, further comprising:
causing, at least in part, a presentation of at least one user interface associated with the streaming of the at least one of the one or more buffered content streams, the streaming of the at least one of the one or more original content streams, or a combination thereof; and
causing, at least in part, a presentation of at least one user interface element in the at least one user interface,
wherein the at least one user interface element indicates whether the streaming of the at least one of the one or more buffered content streams or the streaming of the at least one of the one or more original content streams is presented.

8. A method of claim 7, further comprising:
determining one or more user interactions with the at least one user interface to access at least another one of the one or more original content streams during the streaming of the at least one of the one or more buffered content streams; and
causing, at least in part, in response to the one or more user interactions, an initiation of a streaming of at least another one of the one or more buffered content streams in place of the at least another one of the one or more original content streams.

9. A method of any of claims 1-8, further comprising:
determining at least one input for selecting a buffered mode of operation at at least one content playback application; and
causing, at least in part, a presentation of at least one mode indicator representing the buffered mode of operation,
wherein the initiation of the streaming of the at least one of the one or more buffered content streams is based, at least in part, on the buffered mode of operation.

10. A method of any of claims 1-9, wherein the one or more original content streams that are buffered by the at least buffering service includes, at least in part, all of a plurality of content streams available from the one or more provider sources or a subset of the plurality of the content streams available from the one or more provider sources; and wherein the subset of the plurality of the content streams is selected based, at least in part, on user selection information, user preference information, user profile information, user history information, user contextual information, or a combination thereof.

11. An apparatus comprising means for performing at least a method of any of claims 1-10.

12. An apparatus of claim 11, wherein the apparatus is a mobile phone further comprising:
user interface circuitry and user interface software configured to facilitate user control of at least some functions of the mobile phone through use of a display and configured to respond to user input; and
a display and display circuitry configured to display at least a portion of a user interface of the mobile phone, the display and display circuitry configured to facilitate user control of at least some functions of the mobile phone.

13. A computer-readable storage medium carrying one or more sequences of one or more instructions which, when executed by one or more processors, cause an apparatus to perform at least a method of any of claims 1-10.
